# EUROPEAN PATENT SPECIFICATION

(11) **EP 2 068 325 B1**
(45) Date of publication and mention of the grant of the patent: **23.02.2011**
(21) Application number: 08170685.5
(22) Date of filing: 04.12.2008
(51) Int. Cl.: G21K 1/06

(54) **Optical element for X-ray**
Optisches Element für Röntgenstrahlen
Élément optique pour rayons X

(30) Priority: 05.12.2007 JP 2007314369; 29.10.2008 JP 2008278429
(43) Date of publication of application: 10.06.2009
(73) Proprietor: CANON KABUSHIKI KAISHA, Ohta-ku Tokyo 146-8501 (JP)
(72) Inventor: Miura, Takayuki, Tokyo 146-8501 (JP); Ando, Kenji, Tokyo 146-8501 (JP); Kanazawa, Hidehiro, Tokyo 146-8501 (JP); Teranishi, Koji, Tokyo 146-8501 (JP); Matsumoto, Seiken, Tokyo 146-8501 (JP); Nagata, Kyoko, Tokyo 146-8501 (JP); Tatsumi, Shumpei, Tokyo 146-8501 (JP); Fukui, Shinji, Tokyo 146-8501 (JP)
(74) Representative: TBK-Patent

(56) References cited:
- US-A- 6 011 646
- US-A1- 2007 091 421
- ANDREEV S S ET AL: "Stress reduction of Mo/Si multilayer structures" NUCLEAR INSTRUMENTS & METHODS IN PHYSICS RESEARCH, SECTION - A:ACCELERATORS, SPECTROMETERS, DETECTORS AND ASSOCIATED EQUIPMENT, ELSEVIER, AMSTERDAM, NL, vol. 470, no. 1-2, 1 September 2001 (2001-09-01), pages 162-167, XP004303797 ISSN: 0168-9002

## Description

The present invention relates to an optical element for X-ray used as a multilayer film reflecting mirror for use in an optical system for an exposure device.

Prior art which is related to this field of technology can be found e.g. in document US 2007/0091421 A1 disclosing a multilayer reflective film coated substrate, a manufacturing method thereof, a reflective mask blank, as well as a reflective mask, and document ANDREEV S S ET AL: "Stress reduction of Mo/Si multilayer structures" NUCLEAR INSTRUMENTS & METHODS IN PHYSICS RESEARCH, SECTION - A:ACCELERATORS, SPECTROMETERS, DETECTORS AND ASSOCIATED EQUIPMENT, ELSEVIER, AMSTERDAM, NL, vol. 470, no. 1-2, 1 September 2001 (2001-09-01), pages 162-167.

Generally, with respect to light in an X-ray wavelength range of 40 nm or less, a refractive index of a substance is represented by n = 1-δ-iβ (δ, β: positive real number), wherein both of δ and β are very smaller than 1 (imaginary part β of the refractive index represents absorption of X-ray). Therefore, the refractive index is substantially close to 1, so that X-ray is little refracted.

For that reason, a lens utilizing refraction of light in a visible light range cannot be used for induction of light in an X-ray wavelength range. Therefore, an optical element utilizing reflection is used for the light induction but the refractive index is also close to 1, so that a reflectance is very low. As a result, almost all part of X-ray passes through or is absorbed by the optical element. In view of this problem, a multilayer film reflecting mirror such that many layers including a layer of a substance having a large difference between a refractive index thereof in a wavelength range of X-ray employed and refractive index in a vacuum and a layer of a substance having a small difference between the refractive indices are alternately laminated to provide many reflecting surfaces as an interface between the layers of the substances and a thickness of each of the layers is adjusted on the basis of theory of optical interference has been developed.

As a representative multilayer film for the multilayer film reflecting mirror, those of combinations of W (tungsten)/C(carbon), Mo(molybdenum)/Si(silicon), and the like have been known. Further, these multilayer films have been prepared by a thin-film forming technique such as sputtering, vacuum (vapor) deposition, or a chemical vapor deposition (CVD). In recent years, with development of the multilayer film reflecting mirror for X-ray, evaluation of the multilayer film has been carried out, so that practicality is being clarified with respect to combinations of several materials. For example, a multilayer film having a combination of Mo/Si exhibits a high reflectance on a long wavelength side of a silicon absorption edge of 123 Å, so that the multilayer film is excellent as a material for a multilayer film reflecting mirror used in a reflecting optical system for a soft X-ray reduced projection exposure device. This soft X-ray reduced projection exposure device is presumedly effective means for meeting a requirement for a finer semiconductor circuit and has been studied and developed actively.

On the other hand, with respect to practical application of the multilayer film reflecting mirror, it remains many problems such as prevention of lowering in refractive index, light resistance, film thickness distribution control for obtaining a desired film thickness distribution in a plane of the optical element, suppression of film stress causing a deformation of an optical element surface, and the like. Particularly, when a manufacturing error in film thickness distribution occurs, a surface shape of an optical element surface-polished precisely is changed depending on optical design. This is an important problem since an optical aberration performance of the exposure device is considerably lowered. Further, the film stress also changes the surface shape of the optical element to cause the lowering in optical aberration performance, so that the suppression of the film stress is also an important problem. That is, in order to ensure the optical aberration performance, it can be said that it is necessary to compatibly realize precise film thickness distribution control and the suppression of the film stress.

Of these problems, as measures against the film stress, techniques disclosed in Japanese Laid-Open Patent Application (JP-A) (Tokuhyo) 2002-504715 and JP-A (Tokuhyo) 2002-525698 are known.

JP-A 2002-504715 has proposed that a single or multilayered stress buffering layer different in stress direction from a multilayer film is formed between a substrate and a reflection layer consisting of the multilayer film to cancel deformation. Particularly, with respect to a stress buffering layer constituted by Mo/Si, a method of minimizing stress by optimizing an Mo fraction having the same unit period thickness as that (6.9 nm) of the reflection layer and optimizing the number of pairs of the stress buffering layer (5.8 nm) has been proposed.

JP-A 2002-525698 has proposed a method in which the stress buffering layer is constituted by Mo/Si or Mo/Be to decrease a total film thickness while achieving an effect as the reflection layer. Specifically, such a constitution that an upper portion and a lower portion of the reflection layer have stresses opposite in direction from each other has been proposed.

However, the above-described conventional methods for preventing the deformation of the substrate due to the film stress of the multilayer film in the multilayer film reflecting mirror have accompanied with the following problems.

In the method in which the stress buffering layer consisting of the multilayer film different in stress direction from the multilayer film as the reflection layer is formed between the substrate and the reflection layer to cancel the deformation is accompanied with the following problem.

In the case of the stress buffering layer consisting of the single layer, the film thickness is measured by a contact step height meter or spectroscopy using light of a wavelength which is substantially equal to the film thickness of the single layer. However, in these methods, it was difficult to carry out film thickness measurement with accuracy meeting a requirement for an exposure device particularly in an X-ray range. For this reason, even when the stress buffering layer formed on the substrate causes film thickness non-uniformity depending on its position, film thickness control cannot be carried out at a level less than an accuracy level of the film thickness measurement. That is, in the case where the stress buffering layer consisting of the single layer is used in the optical element such as the exposure device or the like, the film thickness cannot be measured even when the film thickness non-uniformity occurs in the stress buffering layer. When the film thickness non-uniformity is present in the stress buffering layer, a surface shape of the reflection layer formed on the stress buffering layer is also changed, thus resulting in a surface shape error of the optical element.

On the other hand, in the case of the stress buffering layer having a multilayer structure, it is possible to carry out film thickness measurement with accuracy by using diffraction of light of a wavelength substantially equal to a wavelength used. However, as disclosed in JP-A 2002-504715, in the method of minimizing the stress by optimizing the Mo fraction and the like of the stress buffering layer constituted by Mo/Si, the unit period thickness is substantially equal to that of the reflection layer, i.e., is small (about 7 nm), so that an increase in number of pairs of the stress buffering layer is required. For that reason, the total film thickness is large even when each of the layers causes slight film thickness non-uniformity. As a result, the film thickness non-uniformity of the stress buffering layer is increased to result in the surface shape error of the optical element, thus leading to deterioration of an exposure performance of the exposure device.

In the constitution disclosed in JP-A 2002-525698, there are minimum thicknesses of the Mo layer and the Si layer, so that a film thickness ratio of Mo/Si cannot be extremely increased or decreased. Therefore, a stress range controllable by adjustment of respective fractions of the combination of Mo/Si and the combination of Mo/Be. For that reason, sufficient removal of the film stress cannot be achieved, so that it remains the film stress. After all, the pair number of the stress buffering layer is required to be increased to such an extent that the stress buffering layer can sufficiently remove the film stress, so that the constitution of JP-A 2002-525698 is accompanied with the same problem as in JP-A 2002-504715 which is a potential caused of the surface shape error of the optical element.

A principal object of the present invention is to provide an optical element for X-ray in which a total film thickness of a stress buffering layer is decreased to suppress a surface shape error due to film thickness non-uniformity of the stress buffering layer, thus improving an optical performance.

According to the present invention, this is accomplished by what is set forth in the appended independent claims.

Advantageous modifications thereof are defined in the appended dependent claims.

Thus, for optimizing a periodic structure of the second multilayer film, a necessary pair number is reduced by increasing unit period thickness to suppress a total film thickness. In addition, the unit period thickness is made a two or more integral multiple of 7 nm, so that it is possible to carry out film thickness measurement with a spectrophotometer and film thickness control with accuracy during film formation. As a result, it is possible to provide an optical element for X-ray in which film thickness non-uniformity is suppressed to suppress a surface shape error and a high optical performance is achieved.

These and other objects, features and advantages of the present invention will become more apparent upon a consideration of the following description of the preferred embodiments of the present invention taken in conjunction with the accompanying drawings.
Figure 1 is a schematic sectional view showing an optical element for X-ray in Embodiment 1.
Figure 2(a) is a graph showing a spectral reflectance characteristic of a second multilayer film at an incident angle of 5 degrees and Figure 2(b) is a graph showing a spectral reflectance characteristic of a first multilayer film at an incident angle of 5 degrees.
Figure 3(a) is a schematic sectional view of an optical element for X-ray in Embodiment 2 and Figure 3(b) is a schematic view for illustrating a film structure of a reflection multilayer film.
Figure 4 is a schematic view showing a spectrophotometer used in a manufacturing process of the optical element for X-ray according to the present invention.

Preferred embodiments of the present invention will be described in detail with reference to the drawings.

The optical element for X-ray according to the present invention has a high reflection characteristic with respect to soft X-rays particularly of wavelengths from 12 nm to 15 nm. In the soft X-ray wavelength range, it has been known that a multilayer film close to a multilayer structure having a unit period thickness of 7 nm shows a clear reflectance peak with respect to light incident at an angle ranging from zero degrees (in a vertical direction of a film surface) to a large angle of about 30 degrees. A position of this reflectance peak varies depending on the unit period thickness of the multilayer film having the multilayer structure, so that it is possible to measure the film thickness of the multilayer film with accuracy by utilizing this peak.

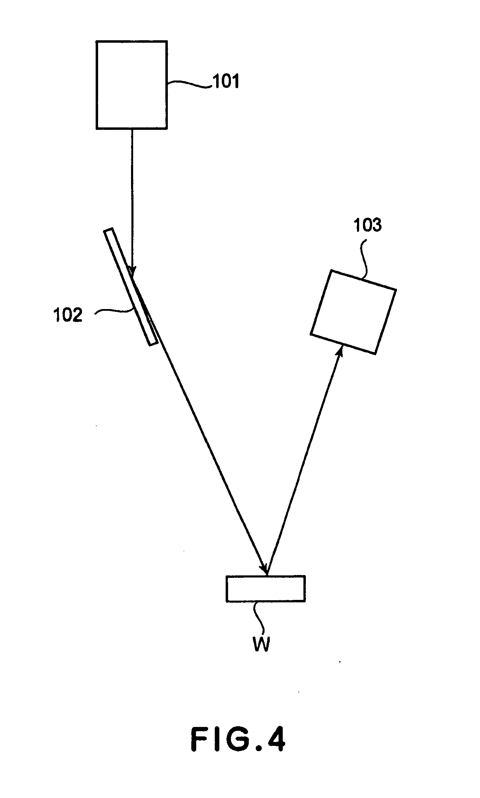

The spectrophotometer utilizing the soft X-rays of wavelengths from 12 nm to 15 nm (Figure 4) is being achieving very good wavelength accuracy, thus being a substantially only one method (means) for achieving required film thickness measurement accuracy of the optical element for a semiconductor exposure device.

The present invention has been accomplished by focusing attention on a point such that a spectrophotometer using the soft X-ray wavelengths from 12 nm to 15 nm capable of permitting high-accuracy measurement is utilized to enable measurement of a film thickness of even a multilayer film having a unit period thickness close to a two or more integral multiple of 7 nm.

The present invention will be described more specifically with reference to the drawings.

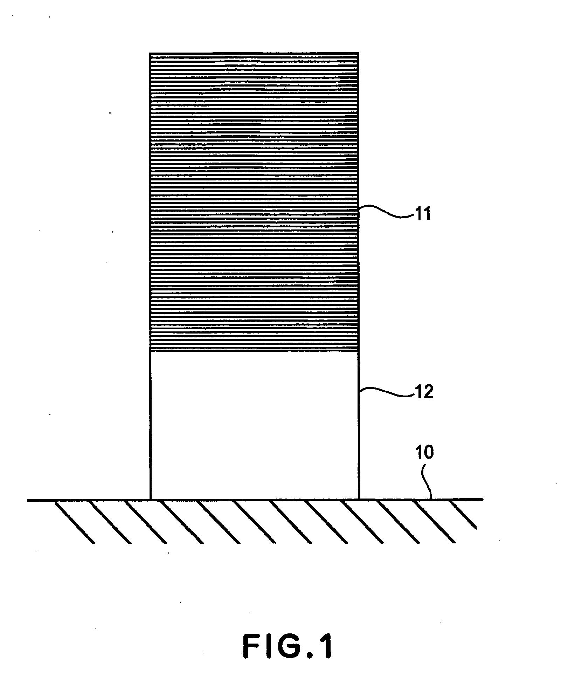

Figure 1 is a schematic sectional view showing a film (layer) structure of an optical element for X-ray in an embodiment. The exposure device includes a substrate 10; a first multilayer film 11, disposed on the substrate 10, having a high reflection characteristic and functioning as a reflecting mirror in a soft X-ray wavelength range; and a second multilayer film, interposed between the first multilayer film 11 and the substrate 10, having a periodic structure.

The first multilayer film 11 has a structure consisting of alternating layers of a plurality of materials different in refractive index with respect to a wavelength of X-ray used.

The second multilayer film functions as a stress buffering layer and is constituted by alternating layers of a plurality of materials different in refractive index with respect to the wavelength of X-ray used. The alternating layers have periodicity with respect to the order and the thickness of the films. A unit period thickness of the alternating layers if 90 % or more and less than 110 % of a two or more integral multiple of 7 nm. By setting the unit period thickness in such a range, compared with a stress buffering layer having a unit period thickness of about 7 nm, the number of necessary pairs can be considerably reduced to suppress a total film thickness. Further, it becomes possible to perform film thickness measurement using a spectrophotometer utilizing high incident angle measurement with soft X-ray in wavelengths from 12 nm to 15 nm. The spectrophotometer utilizing the soft X-ray is a short usable wavelength and is capable of clear reflectance peak measurement at a high incident angle depending on a material, so that the film thickness can be measured with an accuracy of 0.02 % or less.

The surface of the substrate is subjected to optical polishing.

The first multilayer film 11 has a film structure for which a material and a thickness are selected so that desired spectral characteristic can be obtained with respect to the wavelength used. Particularly in the soft X-ray range, the film structure may be any one of Mo/Si, Ru/Si, W/Si, Ru/Be, Ru/Mo/Si, Ru/Mo/Be, Mo/Be, Mo₂C/Si, Mo₂C/Be, Mo/B₄C/Si/B₄C, Mo/C/Si/C, Ru/B₄C/Si/B₄C, Ru/C/Si/C, Ru/B₄C/Be/B₄C, Ru/C/Be/C, W/C/Si/C, and W/C/Si. Further, at an outermost surface portion of the first multilayer film 11, a layer of a material different from those for inside layers of the first multilayer film 11 may be disposed.

Stress of the multilayer film is determined depending on a unit period thickness ratio of the multilayer film, a total number of the layers of the multilayer film, a degree of vacuum in a vacuum chamber during film formation, and a film forming condition. Therefore, it is possible to know the stress of the multilayer film 11 in advance. Further, it is also possible to measure a multilayer film which has been prepared on a test piece.

The stress buffering layer is provided between the multilayer film 11 and the substrate 10 so as to have stress opposite in sign to that of the stress of the above-prepared multilayer film 11, so that a stress buffering effect can be achieved.

The optical element for X-ray of the present invention is characterized in that the thickness of the stress buffering layer is determined so as to permit measurement of the film thickness by the spectrophotometer utilizing the soft X-ray after the film forming condition of the stress buffering layer is determined so as to achieve the stress buffering effect as described above. The film thickness is 90 % or more and less than 110 % of the two or more integral multiple of 7 nm so that the second multilayer film 12 as the stress buffering layer having the periodic structure can show a clear reflectance peak at the high incident angle in the soft X-ray wavelength range from 12 nm to 15 nm. Further, the material for constituting the unit period is selected from the group consisting of Mo/Si, Ru/Si, W/Si, Ru/Be, Ru/Mo/Si, Ru/Mo/Be, Mo/Be, Mo₂C/Si, Mo₂C/Be, Mo/B₄C/Si/B₄C, Mo/C/Si/C, Ru/B₄C/Si/B₄C, Ru/C/Si/C, Ru/B₄C/Be/B₄C, Ru/C/Be/C, W/C/Si/C, and W/C/Si. Particularly, the stress buffering effect is enhanced by using Mo/Si, so that the resultant multilayer film is effective as the stress buffering layer. In that case, it is desirable that the Mo film (layer) has a thickness of 11.6 nm or more and less than 14.4 nm and the Si film (layer) has a thickness of 1 nm or more and less than 2 nm. In this case, the stress buffering effect is particularly enhanced and the clear reflectance peak is exhibited with respect to the soft X-ray at the high incident angle to allow high-accuracy film thickness measurement, so that it is possible to form the multilayer film 12 with less film thickness non-uniformity. It is possible to measure any unit period thickness if the unit period thickness of the periodic structure of the multilayer film 12 is 90 % or more and less than 110 % of the two or more integral multiple of 7 nm but it is desirable that the unit period thickness is 35 nm or less when the Mo/Si film is selected as the stress buffering layer. This is because in the case where the unit period is at least 5 times (35 nm) 7 nm when the stress buffering layer is formed of Mo/Si, X-ray absorption by Mo reduces the reflectance peak, so that it is gradually difficult to measure the film thickness. Therefore, it is desirable that the unit period structure of less than 35 nm may desirably be established in the case of Mo/Si.

As a result, it is possible to realize a high-quality optical element for X-ray with effectively reduced film stress and less film thickness non-uniformity. Further, although details will be described in Embodiments appearing hereinafter, a stress buffering effect per unit layer of the stress buffering layer can be enhanced, so that it is also possible to reduce a total film thickness of the stress buffering layer.

In an exposure device in which a plurality of optical elements for X-ray as described above is mounted, a substrate deformation due to the stress and in-plane film thickness non-uniformity due to a film thickness measurement error are suppressed, so that it is possible to perform light exposure with less optical aberration.

Figure 4 shows a spectrophotometer used for film thickness measurement of the multilayer film in a manufacturing process of the optical element for X-ray. Generally, the spectrophotometer is constituted by a light source for generating light of a wavelength to be used, a spectral portion for dispersing (separating) light, a stage for controlling an attitude of an object to be measured, and a detecting portion for detecting the light.

The spectrophotometer shown in Figure 4 includes a light source 101 for generating soft X-ray, a diffraction grating 102 for dispersing the soft X-ray emitted from the light source 101, and a detector 103 for detecting spectrum from an irradiation object. Spectral measurement is performed by separating light into its spectral components by changing an angle of the diffraction grating 102. Further, by changing a relative angle of irradiation light between an irradiation object W and the detector 103, it is possible to change an incident angle of the irradiation light on the irradiation object W.

### (Embodiment 1)

Figure 1 shows an optical element for X-ray functioning as a reflecting mirror in an X-ray optical system in this embodiment. A first multilayer film 11 having a high reflection characteristic in a soft X-ray wavelength range is constituted by alternating layers of Mo/Si. A film having the same film structure as the first multilayer film 11 is formed on a test piece such as an Si wafer or the like and a surface shape of the test piece is measured before and after the film formation by an interferometer and then film stress is calculated from an amount of change in surface shape of the test piece and Young's modulus. As a result, the film stress of this multilayer film alone was -98.3 N/m².

A second multilayer film 12 occupying a space between the first multilayer film 11 and a substrate 10 has a periodic structure which is formed by alternately laminating an Mo layer and an Si layer so that a unit period thickness which is a film thickness of a pair of Mo/Si layers is within a range of 90 % or more and less than 110 % of two times a thickness of 7 nm. The number of Mo/Si pairs is 11. A film having the same film structure as the second multilayer film 12 is formed on a test piece and a surface shape of the test piece is measured before and after the film formation by the interferometer in a similar manner as described above and then a film stress is calculated from an amount of change in surface shape and Young's modulus of the test piece. The resultant film stress was +89.2 N/m².

The substrate 10 is formed of a material having low thermal expansion coefficient. The surface of the substrate 10 is subjected to optical polishing and has a roughness of 0.32 nm RMS. Generally, an optical element substrate for an exposure device is required to exhibit low thermal expansion coefficient, so that a commercially available material such as "ZERODUR" (mfd. by Schott AG) or "ULE" (mfd. by Corning Inc.) is usable as a material for the substrate 10. Particularly, in an EUV exposure device, optical performances of the substrate such as an absorption coefficient and a refractive index are not requires, so that the substrate may also be not transparent.

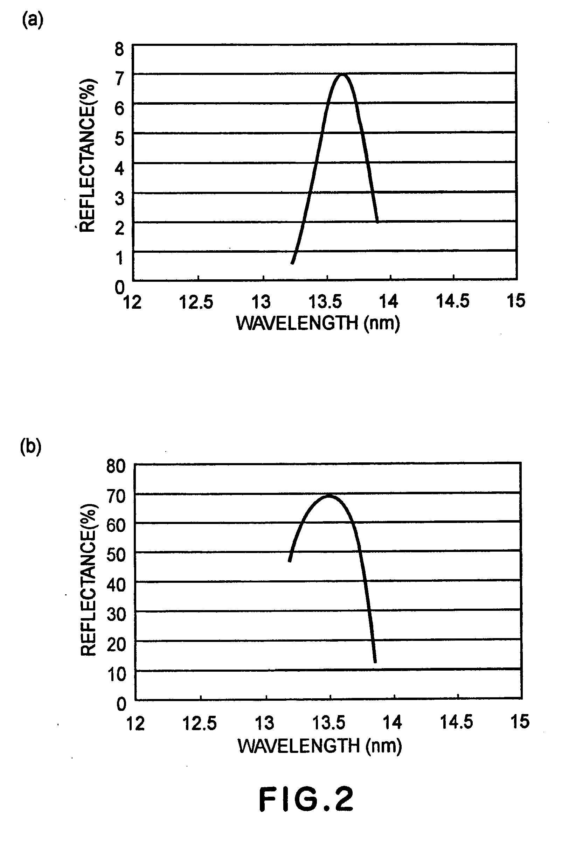

Figure 2(a) shows a spectral reflection characteristic in a soft X-ray range (from a wavelength of 12 nm and a wavelength of 15 nm) of the multilayer film 12. For measurement, the spectrophotometer shown in Figure 4 was used. A spectral reflection characteristic data was obtained by causing light to enter the multilayer film 12 at an inclination angle of 5 degrees from a direction of a normal to the surface of the multilayer film 12 and changing an angle of the diffraction grating to change a wavelength of the incident light. When the substrate 10 was formed on the multilayer film 12 and a spectral reflection characteristic in the soft X-ray range was measured, a clear reflection peak showing a reflectance of 7.02 % was observed at a wavelength of 13.63 nm.

As described above, even in the case where the unit period thickness was increased to about two times the thickness of 7 nm, it was confirmed that high-accuracy film thickness measurement by the spectrophotometer shown in Figure 4 was possible.

Figure 2(b) shows a spectral reflectance of the first multilayer film 11 at an incident angle of 5 degrees. When the first multilayer film 11 was formed on the second multilayer film 21 on the substrate 10 and a spectral reflection characteristic in the soft X-ray range was measured at the incident angle of 5 degrees, a clear reflectance peak showing a reflectance of 69.2 % was observed at a wavelength of 13.50 nm.

Then, when the film stress in a state in which the first multilayer film 11 was formed on the second multilayer film 12 was measured in the same manner as described above, the film stress was -8.8 N/m².

### (Embodiment 2)

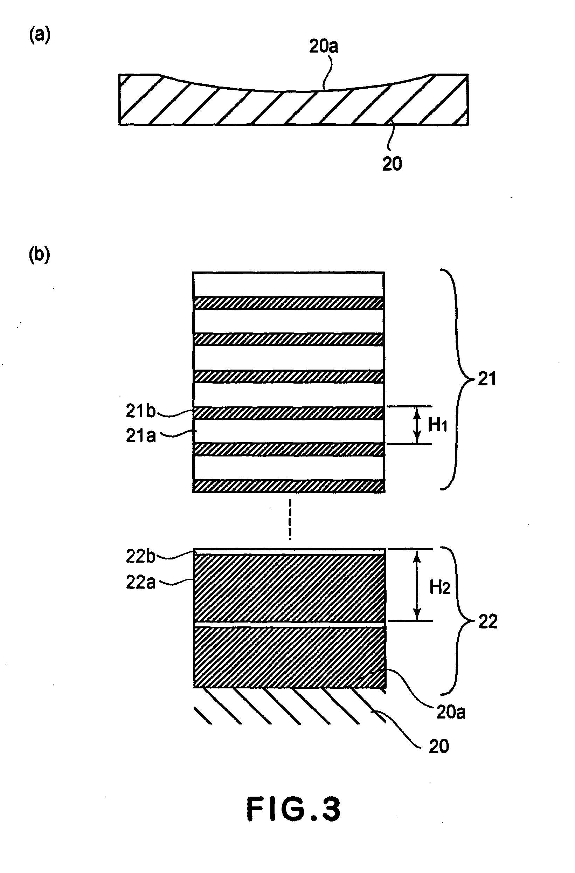

Figure 3(a) is a schematic sectional view showing a concave reflecting mirror for X-ray as an optical element for X-ray in this embodiment, wherein a substrate 20 is constituted by a known low thermal expansion optical material ("ZERODUR") and has a curved surface 20a which has been subjected to optical polishing. On the curved surface 20a, a first multilayer film 21 as an upper multilayer film and a second multilayer film 22 as a lower multilayer film are formed as shown in Figure 3(b).

The first multilayer film 21 has a unit period thickness H1 and is constituted by alternating films of an Si layer 21a and an Mo layer 21b. The second multilayer film 22 has a unit period thickness H2 and is constituted by alternating films of an Si layer 22a and an Mo layer 22b.

The substrate 20 is formed of the material ("ZERODUR").

In order to determine a film forming condition when the first and second multilayer films 21 and 22 are formed, optimization of the film forming condition is performed by using a test piece such as an Si wafer or the like and a concave substrate having the same surface shape as that shown in Figure 3(a).

First, on the test piece, a multilayer film corresponding to a reflecting layer having the same constitution as the upper multilayer film 21 was formed. The Si layer of this multilayer film had a film thickness of 4.12 nm and the Mo layer of this multilayer film had a film thickness of 2.82 nm, so that a unit period thickness was 6.94 nm. When 40 pairs of Mo/Si layers were formed on the test piece, a film stress was -96.2 N/m².

Next, on the test piece, a multilayer film corresponding to a stress buffering layer having the same constitution as the lower multilayer film 22 was formed. The Si layer of this multilayer film had a film thickness of 1.1 nm and the Mo layer of this multilayer film had a film thickness of 13.3 nm, so that a unit period thickness was 14.4 nm. When lamination logarithm of the lower multilayer film was optimized so as to cancel stress of the upper multilayer film, the number of pairs was 9 and a film stress was +97.1 N/m².

Then, on the concave substrate having the same surface shape as that of the substrate 20, a multilayer film having the same film structure as that of the upper multilayer film 21 was formed in 40 pairs. In this case, when the spectral reflection characteristic in the soft X-ray range was measured at a plurality of points at the incident angle of 5 degrees, a film thickness non-uniformity was 0.8 %. For measurement, the spectrophotometer shown in Figure 4 was used and the incident angle of the incident angle at each measurement point was adjusted at 5 degrees by changing an attitude of the concave substrate as an irradiation object.

Based on the measured values, an operational pattern of rotation and revolution of the substrate during vacuum film formation is fine-adjusted and then the film formation was performed again on the concave substrate having the same surface shape as that of the substrate 20. As a result, the film thickness non-uniformity was reduced to ±0.02 %.

Next, a multilayer film having the same film structure as that of the lower multilayer film 22 was formed in 9 pairs on the concave substrate having the same surface shape as that of the substrate 20. In this case, the spectral reflection characteristic in the soft X-ray range was measured at the incident angle of 5 degrees and an operational pattern condition of rotation and revolution of the substrate during the vacuum film formation was optimized so that the film thickness non-uniformity in the curved plane was uniformized, thus reducing the film thickness non-uniformity to ±0.03 %.

Next, the multilayer film 22 was formed in 9 pairs under the above-optimized film forming condition on the substrate 20 as the concave reflecting mirror shown in Figure 3(a). The spectral reflection characteristic in the soft X-ray range was measured at the incident angle of 5 degrees, so that it was confirmed that the film thickness non-uniformity in the curved surface 20a was ±0.03 %.

Next, the multilayer film 21 was formed in 40 pairs on the multilayer film 22 formed on the substrate 20. The spectral reflection characteristic in the soft X-ray range was measured at the incident angle of 5 degrees, so that it was confirmed that the film thickness non-uniformity in the curved surface 20a was ±0.02 %. An average in-plane film stress of the optical element in which the lower multilayer film 22 was laminated on the substrate 20 in 9 pairs and the upper multilayer film 21 was laminated on the lower multilayer film 22 in 40 pairs was +1.1 N/m².

In such a procedure, the concave reflecting mirror having the multilayer film structure is manufactured, so that it is possible to realize the optical element for X-ray which achieves not only a sufficient stress suppressing effect by the stress buffering layer but also less multilayer film.

In this embodiment, the concave substrate is used but a similar effect can also be obtained by performing a similar procedure with respect to a convex substrate.

The multilayer film 22 as the stress buffering layer has the unit period thickness of 14.4 nm and is laminated in 9 pairs, so that a total film thickness is 129.6 nm. The in-plane film thickness non-uniformity of the substrate is ±0.03 %, so that the substrate surface shape causes a shape error 0.039 nm after the formation of the multilayer film 22.

### (Comparative Example)

For comparison, an optical element for achieving an stress buffering effect comparable to that in Embodiment 2 was manufactured by changing a Mo fraction in a state in which the unit period thickness of the lower multilayer film was 7 nm which was about one time a value of λ/2. In this case, 38 pairs of lamination layers (total film thickness: 266.0 nm) are required, so that the stress buffering layer has a total film thickness of 266 nm. The in-plane film thickness non-uniformity of the substrate is ±0.03 % and therefore when the total film thickness is 266 nm, the optical element surface causes a shape error of 0.090 nm after the lower multilayer film formation. This is because the film thickness of the Si layer or the Mo layer has a certain lower limit for achieving the stress buffering effect as described above. Therefore, that is because there is a limit in such a conventional method in which the Mo/Si film thickness ratio per unit is adjusted, so that the stress buffering effect per the film thickness of 7 nm is smaller than that in the present invention.

As a result in the optical element for X-ray of the present invention, it was possible to confirm that the total film thickness in a state in which the film stress is suppressed is reduced to suppress a shape error of the optical element surface due to the film thickness non-uniformity.

In an exposure device in which the optical element for X-ray with such a small surface shape error is mounted, it is possible to obtain an optical system having a small residual optical aberration.

The stress buffering effects of the stress buffering layers of the present invention and the conventional stress buffering layer are shown in Table 1.

**Table 1**

| | *1 | *2 | *3 | *4 | *5 |
|---|---|---|---|---|---|
| EMB.No. | U.P.T | Layers | Pair | Thickness | Effect |
| 1 | 14.7 | Mo/Si | 11 | 161.7 | +89.2 |
| 2 | 14.4 | Mo/Si | 9 | 129.6 | +97.1 |
| Comp. Example. 1 | 7 | Mo/Si | 38 | 266.0 | about +90.0 |

| | | | | | |
|---|---|---|---|---|---|
| *1: unit period thickness (nm) *2: layers for pair *3: the number of pairs *4: total film thickness (nm) *5: stress buffering effect (N/m²) | | | | | |

From Table 1, it is understood that in the present invention, compared with the conventional stress buffering layer, a similar stress buffering effect can be achieved with the number of pairs smaller than that of the conventional stress buffering layer.

While the invention has been described with reference to the structures disclosed herein, it is not confined to the details set forth and this application is intended to cover such modifications or changes as may come within the scope of the following claims.

An optical element for X-ray includes a substrate, a first multilayer film having a reflection property with respect to light in a soft X-ray wavelength range, and a second multilayer film, disposed between the substrate and the first multilayer film, for reducing film stress of the first multilayer film. The second multilayer film has a periodic structure having a unit period film thickness which is 90 % or more and less than 110 % of a two or more integral multiple of 7 nm.

## Claims

1. An optical element for X-ray, comprising:
a substrate (10);
a first multilayer film (11; 21) having a structure consisting of alternating layers of a plurality of materials different in refractive index in a soft X-ray wavelength range to have a reflection property with respect to light in the soft X-ray wavelength range; and
a second multilayer film (12; 22), disposed between said substrate (10) and said first multilayer film (11; 21), for reducing film stress of said first multilayer film (11; 21),
wherein said second multilayer film (12; 22) has a periodic structure having a unit period film thickness which is 90 % or more and less than 110 % of a two or more integral multiple of 7 nm,
**characterized in that**
the second multilayer film (12; 22) having a stress opposite in sign to the stress of said first multilayer film (11; 21).

2. An element according to Claim 1, wherein said second multilayer film (12; 22) has a Mo/Si film structure.

3. An element according to Claim 2, wherein said first multilayer film (11; 21) has a film structure selected from the group consisting of Mo/Si, Ru/Si, W/Si, Ru/Be, Ru/Mo/Si, Ru/Mo/Be, Mo/Be, Mo₂C/Si, Mo₂C/Be, Mo/B₄C/Si/B₄C, Mo/C/Si/C, Ru/B₄C/Si/B₄C, Ru/C/Si/C, Ru/B₄C/Be/B₄C, Ru/C/Be/C, W/C/Si/C, and W/C/Si.

4. An element according to Claim 2, wherein in the Mo/Si film structure of said second multilayer film (12; 22), the Mo film has a thickness of 11.6 nm or more and less than 14.4 nm and the Si film has a thickness of 1 nm or more and less than 2 nm.

5. An exposure device comprising:
an optical element for X-ray according to Claim 1.

## Patentansprüche

1. Optisches Element für Röntgenstrahlen, umfassend:
ein Substrat (10);
einen ersten Mehrschichtfilm (11; 21) mit einer Struktur, die aus abwechselnden Schichten aus einer Vielzahl von Materialien mit unterschiedlichem Brechungsindex in einem Wellenlängen-Bereich weicher Röntgenstrahlung besteht, um eine Reflexionseigenschaft gemäß dem Licht in dem Wellenlängen-Bereich weicher Röntgenstrahlung aufzuweisen; und
einen zwischen dem Substrat (10) und dem ersten Mehrschichtfilm (11; 21) platzierten zweiten Mehrschichtfilm (12; 22), um eine Filmbeanspruchung des ersten Mehrschichtfilms (11; 21) zu reduzieren,
wobei der zweite Mehrschichtfilm (12; 22) eine periodische Struktur aufweist, die eine Einheitsperiodenfilmdicke aufweist, die 90% oder mehr und weniger als 110% eines zwei- oder mehrfachen Ganzzahligen von 7nm ist,
**dadurch gekennzeichnet, dass**
der zweite Mehrschichtfilm (12; 22) eine Beanspruchung mit entgegen gesetztem Vorzeichen zu der Beanspruchung des ersten Mehrschichtfilms (11; 21) aufweist.

2. Element gemäß Anspruch 1, wobei der zweite Mehrschichtfilm (12; 22) eine Mo/Si Filmstruktur aufweist.

3. Element gemäß Anspruch 2, wobei der erste Mehrschichtfilm (11; 21) eine Filmstruktur ausgewählt aus der Gruppe bestehend aus Mo/Si, Ru/Si, W/Si, Ru/Be, Ru/Mo/Si, Ru/Mo/Be, Mo/Be, Mo₂C/Si, Mo₂C/Be, Mo/B₄C/Si/B₄C, Mo/C/Si/C, Ru/B₄C/Si/B₄C, Ru/C/Si/C, Ru/B₄C/Be/B₄C, Ru/C/Be/C, W/C/Si/C, und W/C/Si aufweist.

4. Element gemäß Anspruch 2, wobei bei der Mo/Si Filmstruktur des zweiten Mehrschichtfilms (12; 22) der Mo-Film eine Dicke von 11,6 nm oder mehr und weniger als 14,4 nm aufweist, und der Si-Film eine Dicke von 1 nm oder mehr und weniger als 2 nm aufweist.

5. Aufnahmevorrichtung, umfassend:
ein optisches Element für Röntgenstrahlen nach Anspruch 1.

## Revendications

1. Elément optique pour rayons X, comprenant :
un substrat (10) ;
un premier film multicouche (11 ; 21) ayant une structure constituée de couches alternées d'une pluralité de matériaux ayant des indices de réfraction différents dans une gamme de longueurs d'onde de rayons X mous, afin qu'il ait une propriété de réflexion vis-à-vis d'une lumière se situant dans la gamme de longueurs d'onde des rayons X mous ; et
un second film multicouche (12 ; 22), disposé entre ledit substrat (10) et ledit premier film multicouche (11 ; 21), pour réduire la contrainte de film dudit premier film multicouche (11 ; 21),
dans lequel ledit second film multicouche (12 ; 22) possède une structure périodique ayant une épaisseur de film périodique unitaire représentant 90 % ou plus et moins de 110 % d'un multiple entier égal à deux ou plus de 7 nm,
**caractérisé en ce que**
le second film multicouche (12 ; 22) présente une contrainte de signe opposée à la contrainte dudit premier film multicouche (11 ; 21).

2. Elément selon la revendication 1, dans lequel ledit second film multicouche (12 ; 22) a une structure de film Mo/Si.

3. Elément selon la revendication 2, dans lequel ledit premier film multicouche (11 ; 21) a une structure de film sélectionnée dans le groupe constitué de Mo/Si, Ru/Si, W/Si, Ru/Be, Ru/Mo/Si, Ru/Mo/Be, Mo/Be, Mo₂C/Si, Mo₂C/Be, Mo/B₄C/Si/B₄C, Mo/C/Si/C, Ru/B₄C/Si/B₄C, Ru/C/Si/C, Ru/B₄C/Be/B₄C, Ru/C/Be/C, W/C/Si/C et W/C/Si.

4. Elément selon la revendication 2, dans lequel, dans la structure de film Mo/Si dudit second film multicouche (12 ; 22), le film de Mo a une épaisseur de 11,6 nm ou plus et de moins de 14, 4 nm et le film de Si a une épaisseur de 1 nm ou plus et inférieure à 2 nm.

5. Dispositif d'exposition comprenant :
un élément optique pour rayons X selon la revendication 1.
